(19) **Europäisches Patentamt**
**European Patent Office**
**Office européen des brevets**

(11) **EP 4 201 967 B1**

(12) **FASCICULE DE BREVET EUROPEEN**

(45) Date de publication et mention
de la délivrance du brevet:
**07.02.2024 Bulletin 2024/06**

(21) Numéro de dépôt: **21216732.4**

(22) Date de dépôt: **22.12.2021**

(51) Classification Internationale des Brevets (IPC):
**C08F 8/28** *(2006.01)* **C08F 220/56** *(2006.01)*
**B01J 19/00** *(2006.01)* **B01J 19/18** *(2006.01)*

(52) Classification Coopérative des Brevets (CPC):
(C-Sets disponibles)
**B01J 19/0033; B01J 19/0066; B01J 19/0086;
B01J 19/1881; C08F 8/28; C08F 220/56;**
B01J 2219/00029; B01J 2219/00162;
B01J 2219/00175; B01J 2219/00177;
B01J 2219/185 (Cont.)

(54) **EQUIPEMENT ET METHODE POUR PREPARER UN POLYMERE FONCTIONNALISE PAR UN ALDEHYDE**

AUSRÜSTUNG UND METHODE ZUR HERSTELLUNG EINES DURCH EIN ALDEHYD FUNKTIONALISIERTEN POLYMERS

DEVICE AND METHOD FOR PREPARING AN ALDEHYDE-FUNCTIONALISED POLYMER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**28.06.2023 Bulletin 2023/26**

(73) Titulaire: **SNF Group**
**42160 Andrézieux-Bouthéon (FR)**

(72) Inventeurs:
• **BARRIERE, Cyril**
**42160 ANDREZIEUX BOUTHEON (FR)**
• **FOUGEROUSSE, Damien**
**42160 ANDREZIEUX BOUTHEON (FR)**

(74) Mandataire: **Cabinet Laurent & Charras
Le Contemporain
50 Chemin de la Bruyère
69574 Dardilly Cedex (FR)**

(56) Documents cités:
**WO-A1-2013/128109 US-A1- 2011 146 925
US-A1- 2017 306 065**

(52) Classification Coopérative des Brevets (CPC):
(Cont.)

C-Sets
**C08F 8/28, C08F 220/56;**
**C08F 220/56, C08F 226/02**

(52) Classification Coopérative des Brevets (CPC):
(Cont.)

C-Sets

**Description**

La présente invention concerne un nouvel équipement et un procédé de fabrication de polymères fonctionnalisés par un aldéhyde, lesdits polymères étant avantageusement mis en oeuvre dans un procédé de fabrication de papier ou de carton.

Les polyacrylamides hydrosolubles fonctionnalisés par un aldéhyde sont largement utilisés dans les procédés de fabrication du papier afin d'augmenter notamment la résistance à sec de ces papiers. Ces polyacrylamides hydrosolubles sont principalement fabriqués à partir de polymères bases non ioniques, cationiques, anioniques ou amphotériques.

Les polyacrylamides fonctionnalisés par un aldéhyde présentent deux faiblesses :

- Ils sont disponibles sous forme de solutions aqueuses diluées contenant entre 5 et 12% en poids de polymère. Ainsi leur acheminement vers les papeteries implique des contraintes logistiques et des coûts de transport importants.
- Ces polymères en solution aqueuse ont une durée de vie courte (entre 10 et 40 jours) et au-delà, les solutions de polymères se gélifient.

De plus, lors de la production du polymère glyoxalé, il est nécessaire de suivre l'avancement de la réaction de fonctionnalisation avec l'aldéhyde. Cela consiste en une mesure de la viscosité du polymère à l'aide d'un viscosimètre, en effectuant des prélèvements réguliers du milieu réactionnel. Ce suivi nécessite la présence permanente d'un opérateur.

Pour s'affranchir de toutes ces contraintes, il est possible de fabriquer ces polymères fonctionnalisés par un aldéhyde directement à partir d'équipements installés au sein des papeteries. Toute la difficulté de la fabrication de ces polymères au sein de la papeterie réside alors dans les moyens mis en place pour contrôler automatiquement la réaction de fonctionnalisation avec l'aldéhyde.

Le document US 2017/0306065 de la société ACAT décrit un équipement de glyoxalation (fonctionnalisation d'un polyacrylamide par du glyoxal) sur site avec comme paramètres de contrôle :

- Le suivi de turbidité
- L'ajustement de pH en fonction de la température
- L'ajustement de pH en fonction du temps de réaction
- Le saut de pH lors de la réaction
- La consommation réelle de la pompe de recirculation.

Les paramètres de contrôle mis en avant dans ce document sont intéressants. Néanmoins, ils présentent l'inconvénient de pas refléter précisément l'évolution du poids moléculaire du polymère au cours de la réaction de glyoxalation (une ramification de la structure du polymère est possible). En effet, la mesure de turbidité est sensible à la qualité des eaux (pollution, matières en suspension) et à la qualité du polymère base (impuretés, colorations...).

De ce fait, le contrôle de la réaction par un suivi de turbidité peut avoir comme conséquence :

- L'obtention d'un polymère faiblement glyoxalé (peu de réaction entre le glyoxal et le polymère base). La solution de polymère ainsi obtenue présenterait alors une faible évolution de sa viscosité au cours de la réaction.
- L'obtention d'un polymère fortement glyoxalé qui se présenterait sous forme d'un gel insoluble.

Ce sont ces inconvénients liés à la réaction de fonctionnalisation par un aldéhyde d'un polymère que l'on se propose de résoudre.

La demanderesse a développé un nouvel équipement incluant un dispositif de mesure en ligne de différentiel de pression (mesure de delta P) pour un suivi en continu de la réaction de fonctionnalisation du polymère par un aldéhyde. Cet équipement permet de contrôler efficacement la réaction de fonctionnalisation et de s'affranchir des inconvénients décrits précédemment.

La réaction de fonctionnalisation d'un polymère par un dérivé fonctionnalisé par un aldéhyde peut donc être arrêtée (par ajout d'acide) quand la variation des valeurs de delta P a atteint une valeur cible.

Contrairement à une mesure de turbidité, la mesure de $\Delta P$ n'est pas sensible à la qualité des eaux utilisées, ni à la qualité du polymère.

Un autre aspect de l'invention concerne une méthode pour préparer une solution d'un polymère fonctionnalisé par un aldéhyde utilisant l'équipement précédemment décrit.

Plus précisément, l'invention concerne un équipement pour préparer une solution d'un polymère P2 non ionique, cationique, anionique ou amphotère par réaction entre un composé comprenant au moins une fonction aldéhyde et au moins une solution aqueuse de polymère base P1 comprenant au moins un monomère non-ionique choisi parmi l'acrylamide, le méthacrylamide, le N,N-diméthylacrylamide, et l'acrylonitrile, ledit équipement comprenant un réacteur muni d'un système d'agitation ; ainsi qu'au moins :

- un conduit destiné à alimenter le réacteur en eau, avantageusement sa partie supérieure,
- un conduit équipé d'une pompe doseuse destiné à alimenter le réacteur en solution aqueuse de polymère P1,
- un conduit équipé d'une pompe doseuse destiné à alimenter le réacteur en composé comprenant au moins une fonction aldéhyde,
- un conduit équipé d'une pompe doseuse destiné à alimenter le réacteur en base, avantageusement sa partie supérieure ,
- un conduit équipé d'une pompe doseuse destiné à alimenter le réacteur en acide, avantageusement sa partie supérieure,
- une boucle de recirculation destinée à faire recirculer la solution de polymère P2 depuis le fond du réacteur vers un niveau supérieur dudit réacteur.

L'équipement se caractérise en ce que la boucle de recirculation comprend entre la sortie du réacteur et l'entrée du réacteur, une pompe de recirculation, une sonde de mesure de pH, et un dispositif de mesure en ligne de différentiel de pression sous la forme d'un tube calibré destiné à mesurer la différence de pression de la solution de polymère **P2** entre l'entrée et la sortie dudit tube calibré, ledit tube calibré étant positionné en dérivation de la boucle de recirculation.

Dans un mode de réalisation avantageux, l'alimentation du réacteur en solution aqueuse de polymère P1, et en composé comprenant au moins une fonction aldéhyde, se fait dans la boucle de recirculation.

En d'autres termes, l'équipement comprend un conduit équipé d'une pompe doseuse destiné à alimenter le réacteur en solution aqueuse de polymère P1 et un conduit équipé d'une pompe doseuse destiné à alimenter le réacteur en composé comprenant au moins une fonction aldéhyde connectés à la boucle de recirculation.

Le polymère base **P1** peut-être non ionique, cationique, anionique ou amphotère. Il est avantageusement hydrosoluble.

Le terme « polymère », désigne aussi bien les homopolymères que les copolymères.

Un polymère amphotère est un polymère comprenant des charges cationiques et des charges anioniques, préférentiellement autant de charges anioniques que de charges cationiques.

Tel qu'utilisé ici, le terme "polymère hydrosoluble" désigne un polymère qui donne une solution aqueuse sans particule insoluble lorsqu'il est dissous sous agitation pendant 4 heures à 25°C et à une concentration de 20 g.L$^{-1}$ dans l'eau.

Le polymère **P1** peut comprendre un monomère cationique qui est préférentiellement choisi dans le groupe comprenant l'acrylate de diméthylaminoéthyle (ADAME) quaternisé ou salifié, le méthacrylate de diméthylaminoéthyle (MADAME) quaternisé ou salifié, le chlorure de diméthyldiallylammonium (DADMAC), le chlorure d'acrylamidopropyltriméthylammonium (APTAC), et le chlorure de méthacrylamidopropyltriméthylammonium (MAPTAC).

Le polymère **P1** peut comprendre un monomère anionique qui est préférentiellement choisi parmi l'acide 2-acrylamido-2-méthylpropane sulfonique, l'acide acrylique, l'acide méthacrylique, l'acide itaconique, et/ou leurs sels.

Optionnellement, le polymère **P1** peut être ramifié (structuré) par un agent ramifiant radicalaire pouvant être choisi dans le groupe comprenant le sodium allyl sulfonate, le sodium méthallyl sulfonate, le sodium méthallyl disulfonate, le méthylènebisacrylamide, la triallylamine, le chlorure de triallylammonium, l'éthylène glycol di-acrylate, le polyéthylène glycol diméthacrylate, le diacrylamide, le cyanométhylacrylate, le vinyloxyéthylacrylate ou méthacrylate. De préférence, la teneur en poids d" agent ramifiant dans **P1** est comprise entre 5 et 5000 ppm par rapport à la masse de polymère.

La structuration du polymère **P1** peut aussi être obtenue avec au moins un composé polyfonctionnel contenant au moins 3 hétéroatomes choisis parmi N, S, O, P et présentant chacun au moins un hydrogène mobile. Ce composé polyfonctionnel peut notamment être une polyéthylèneimine ou une polyamine.

Avantageusement le polymère **P1** contient au moins 5 % de moles de monomère non-ionique choisi parmi l'acrylamide, le méthacrylamide, le N,N-diméthylacrylamide, et l'acrylonitrile, préférentiellement au moins 70% moles.

Selon la présente invention, le "poids moléculaire moyen en poids" du polymère hydrosoluble synthétique **P** est déterminé par mesure de la viscosité intrinsèque. La viscosité intrinsèque peut être mesurée par des méthodes connues de l'homme du métier et peut notamment être calculée à partir des valeurs de viscosité réduite pour différentes concentrations par une méthode graphique consistant à tracer les valeurs de viscosité réduite (sur l'axe des ordonnées) en fonction des concentrations (sur l'axe des abscisses) et en extrapolant la courbe à une concentration nulle. La valeur de viscosité intrinsèque est lue sur l'axe des ordonnées ou à l'aide de la méthode des moindres carrés. Ensuite, le poids moléculaire moyen en poids peut être déterminé par l'équation de Mark-Houwink :

$$[\eta] = K\ M^{\alpha}$$

[η] représente la viscosité intrinsèque du polymère déterminée par la méthode de mesure de la viscosité en solution,

K représente une constante empirique,

M représente le poids moléculaire du polymère,

α représente le coefficient de Mark-Houwink,

α et K dépendent du système particulier polymère-solvant. Des tableaux connus de l'homme du métier donnent les valeurs de α et K selon le système polymère-solvant.

Le polymère **P1** a un poids moléculaire moyen avantageusement supérieur ou égal 100 000 daltons encore plus avantageusement supérieur ou égal à 200 000 daltons. Il est avantageusement inférieur ou égal à 2 millions daltons, encore plus avantageusement inférieur à 1 million de daltons. De préférence, le polymère **P1** a un poids moléculaire moyen avantageusement compris entre 100 000 daltons et 2 millions de daltons encore plus avantageusement compris entre 200 000 daltons et 1 millions de daltons.

Le composé comprenant au moins une fonction aldéhyde réagissant sur **P2** pour donner **P1** est avantageusement choisi parmi le glyoxal, le glutaraldéhyde, le furane-dialdéhyde, le 2-hydroxyadipaldéhyde, le succinaldéhyde, le dialdéhyde amidon, le 2,2-diméthoxyethanal et leurs combinaisons. Encore plus préférentiellement, le composé comprenant au moins une fonction aldéhyde est le glyoxal.

Préférentiellement, le dispositif de mesure en ligne de différentiel de pression est positionné en dérivation du circuit de recirculation de part et d'autre de la pompe de recirculation.

Dans un mode de réalisation particulier, le dispositif de mesure en ligne de différentiel de pression se présente sous la forme d'un circuit muni d'un point d'entrée positionné en amont de la pompe de recirculation et un point de sortie positionné en aval de la sonde de mesure de pH.

Lorsqu'on alimente le réacteur en solution aqueuse de polymère **P1** et en composés comprenant au moins une fonction aldéhyde via la boucle de recirculation, le point de sortie du dispositif de mesure en ligne de différentiel est positionné en aval des points d'alimentation de polymère **P1** et des composés comprenant au moins une fonction aldéhyde.

Avantageusement, le dispositif de mesure en ligne de différentiel de pression comprend en outre :

- une vanne de régulation permettant de maintenir un débit constant dans un tube calibré,
- un débitmètre permettant de mesurer et de réguler le débit en aval de la vanne de régulation,

Selon une autre préférence, le dispositif de mesure en ligne de différentiel de pression comprend, avantageusement en aval de la vanne de régulation, un filtre double à mailles comprises entre 5 à 50 microns.

Le dispositif de mesure en ligne de différentiel de pression comprend selon une autre préférence un amortisseur de pulsation de la boucle de recirculation positionné avantageusement entre le filtre double maille et la vanne de régulation.

La base circulant dans le conduit est préférentiellement de l'hydroxyde de sodium (soude) en solution aqueuse.

L'acide circulant dans le conduit est préférentiellement de l'acide sulfurique en solution aqueuse.

De préférence, l'équipement de l'invention comprend un turbidimètre directement connecté sur la partie supérieure du réacteur

L'invention concerne aussi un procédé pour préparer une solution d'un polymère **P2** non ionique, cationique, anionique ou amphotère par réaction entre un composé comprenant au moins une fonction aldéhyde et au moins une solution aqueuse de polymère base **P1** comprenant au moins un monomère non-ionique choisi parmi l'acrylamide, le méthacrylamide, le N,N-diméthylacrylamide, et l'acrylonitrile, au moyen de l'équipement précédemment décrit, ladite méthode comprenant les étapes successives suivantes :

- alimenter le réacteur en eau et activer la pompe de recirculation,
- alimenter le réacteur en polymère **P1**, de préférence la boucle de recirculation et activer le système d'agitation,
- alimenter le réacteur, de préférence la boucle de recirculation, en composé comprenant au moins une fonction aldéhyde,
- alimenter le réacteur en base et stopper l'ajout lorsque la sonde de mesure de pH indique un pH compris entre 8 et 12,
- mesurer le différentiel de pression de la solution de polymère **P2** circulant dans la boucle de recirculation avec l'appareil de mesure en ligne de différentiel de pression,
- optionnellement mesurer en continu la turbidité de la solution de polymère **P2** au sein du réacteur.
- lorsque la variation du différentiel de pression de la solution de polymère **P2** atteint une valeur comprise entre 100 % et 500%, ajouter de l'acide dans le réacteur, et stopper l'ajout lorsque la sonde de mesure de pH indique un pH compris entre 2,5 et 5.

Avantageusement le composé comprenant au moins une fonction aldéhyde est ajouté à une concentration massique de 1 à 30%.

Avantageusement, l'ajout d'acide dans le réacteur est effectué lorsque la variation du différentiel de pression de la solution de polymère **P2** est comprise entre 200% et 400%.

Préférentiellement au terme du procédé, la solution de polymère **P2** obtenue est transférée avec la pompe de recirculation dans une cuve de stockage dotée d'un moyen de détection de niveau bas en solution de polymère **P2,** puis l'ensemble des conduits et le réacteur sont rincés avec de l'eau pour recommencer le procédé tel que décrit précédemment lorsque le niveau bas de la cuve de stockage est détecté.

Avantageusement, l'invention concerne aussi un procédé d'obtention de papier ou carton comprenant l'ajout dans la suspension fibreuse, d'une solution de polymère **P2** obtenue selon le procédé décrit précédemment.

La matière sèche de la suspension fibreuse est généralement à base de fibres cellulosiques et de charges, avantageusement constituée de fibres cellulosiques et de charges. Le terme « fibres cellulosiques » englobe toute entité cellulosique, incluant les fibres, les fines, les micro-fibrilles ou les nano-fibrilles. Par suspension fibreuse, on entend la pâte épaisse ou la pâte diluée qui sont à base d'eau et de fibres cellulosiques.

Le polymère **P2** est ajouté dans le procédé papetier, avant ou après formation de la feuille de papier, carton ou analogue. Ainsi, la mise en contact de la matière cellulosique avec le polymère de l'invention peut être effectuée de différentes manières et notamment selon les méthodes typiques connues de l'homme du métier. Le polymère **P2** pourra être appliqué par une technique d'imprégnation, ou pourra être directement ajouté dans la suspension fibreuse à tout endroit du procédé de fabrication du papier où habituellement des agents de résistance à sec sont introduits.

Ainsi, le polymère **P2** pourra être introduit dans la pâte épaisse (ou *thick stock* en anglais) ou dans la pâte diluée (ou *thin stock* en anglais). Il pourra être ajouté au niveau de la pompe de mélange ou du tamis filtrant. Préférentiellement le polymère P2 sera introduit avant la caisse de tête.

Préférentiellement, le polymère selon l'invention est injecté industriellement dans la suspension fibreuse, i.e. avant sa dilution par les eaux blanches (pâte épaisse). La consistance de la pâte est de l'ordre de 2 à 5 % en masse de fibres cellulosiques.

Le procédé papetier selon l'invention peut être mis en oeuvre avec tout type de pâte à papier comme par exemple des pâtes de fibres vierges (Kraft, Bisulfite), de fibres recyclées, des pâtes désencrées, des pâtes mécaniques et thermomécaniques.

Le polymère **P2** est avantageusement préparé selon le procédé de l'invention avec un équipement selon l'invention à proximité de la machine à papier.

Les exemples suivants illustrent l'invention sans toutefois en limiter la portée.

**Exemples de réalisation de l'invention**

**Exemple 1**

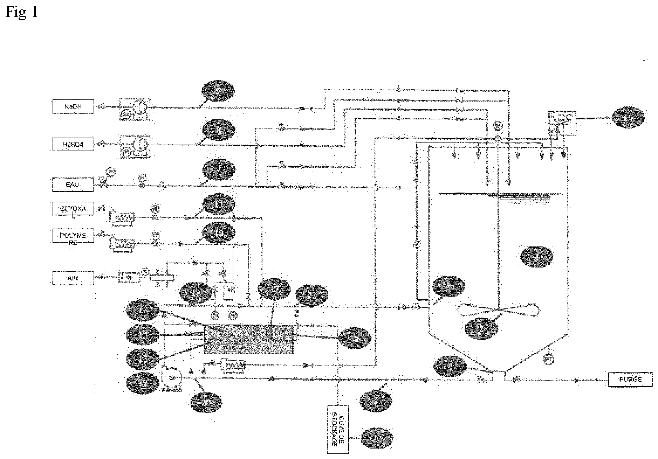

La figure 1est une représentation schématique de l'équipement de l'invention.

Cet équipement comprend essentiellement un réacteur (1) muni d'un système d'agitation (2), le réacteur étant connecté à une boucle de recirculation (3). La boucle de recirculation (3) se présente sous la forme d'une canalisation émergeant du fond (4) du réacteur (1) désigné également « sortie » de la boucle de recirculation et dont l'extrémité opposée est connectée à un niveau supérieur (5) du réacteur (1).

L'équipement présente en outre des conduits destinés à alimenter le réacteur avec les réactifs utilisés pour obtenir le produit final.

Il s'agit des canalisations (7), (8) et (9) alimentant le sommet du réacteur respectivement en eau, acide et base

Le polymère et le composé comprenant au moins une fonction aldéhyde sont introduits dans la boucle de recirculation (3) via les canalisations respectivement (10) et (11).

Selon une caractéristique essentielle de l'équipement de l'invention, la boucle de recirculation (3) présente successivement différents éléments depuis la sortie (4) du réacteur jusqu'à l'entrée (5) dans le réacteur, à savoir une pompe de recirculation (12), une sonde de pH (13) et enfin un dispositif de mesure en ligne de différentiel de pression (14).

Le dispositif (14) comprend, dans le sens de circulation du polymère, une vanne de régulation (15) permettant de maintenir un débit constant, un débitmètre (16) permettant de mesurer et de réguler le débit en aval de la vanne de régulation (15), un tube calibré (17) créant une perte de charge et un appareil de mesure de différentiel de pression (18) positionné entre l'entrée et la sortie du tube calibré, apte à mesurer la perte de pression du fluide après le passage dudit fluide dans le tube calibré.

L'équipement de l'invention comprend en outre un turbidimètre (19) connecté sur la boucle de recirculation (3).

Le dispositif (14) est positionné en dérivation de la boucle de recirculation entre un point (20) en amont de la pompe de recirculation et un point (21) en aval des entrée (10) et (11) des réactifs.

L'équipement comprend enfin une cuve de stockage (22) dotée d'un moyen de détection de niveau bas en solution de polymère **P2** permettant de déclencher l'alimentation du réacteur (6) en eau lorsque le niveau bas de la cuve de stockage est détecté.

**Exemple 2**

*Préparation d'une solution de polymère **P1a** (AM/DADMAC (95/5 mol%)) : amorçage polymérisation **P1a** avec du SPS et solution d'acrylamide filtrée*

Dans un réacteur de 1 litre équipé d'un agitateur mécanique, d'un thermomètre, d'un réfrigérant et d'une canne plongeante d'azote gazeux, on introduit 333,8g d'eau, 50,1g de chlorure de diallyldiméthyl ammonium (DADMAC, 64% en poids dans de l'eau). Le pH de la solution est ajusté à 2.5 avec de l'acide sulfurique. Le milieu est chauffé et maintenu à une température comprise entre 79 et 81°C grâce à un bain-marie. Grâce à deux coulées continues, on incorpore 535,8 g d'une solution d'acrylamide filtrée (solution à 50% en poids) pendant 90 minutes et une solution de persulfate de sodium (SPS, 10% en poids dans de l'eau) pendant 90 minutes. Après 30 minutes de vieillissement, 0,26g de bisulfite de sodium (solution à 40% en poids) sont additionnés pour faire réagir les éventuels monomères résiduels. Un nouveau vieillissement de 60 minutes est appliqué avant refroidissement. La solution de polymère **P1a** obtenue a un pH de 5.0, une concentration massique en polymère de 30,1% et une viscosité Brookfield (module LV3, 12 tr/min, 25°C) de 8500 centipoises (cps).

*Préparation d'une solution de polymère **P2a** (réaction suivie par turbidimètre)*

Dans un réacteur de 1 litre équipé d'un agitateur mécanique, on introduit 46,4g de la solution de polymère **P1a** et 748,4g d'eau. Le réacteur est muni d'une sonde de pH. Après 10 minutes d'agitation, on introduit 5,22g de glyoxal à 40% (en poids dans de l'eau) puis on ajuste le pH à 10,2 avec une solution de soude à 10% (en poids dans de l'eau). La température est maintenue entre 20 et 22°C. L'avancement de la réaction est contrôlé par turbidité. Lorsque la variation de turbidité (turbidimètre Hanna) de la solution de polymère **P2a** est égale à +2 NTU, on stoppe la réaction par un abaissement du pH à moins de 3,5 par addition d'acide sulfurique (92% en poids dans de l'eau). La viscosité Brookfield (module LV1, 60 tours/minute/25°C) de la solution de polymère **P2a** (concentration massique : 2%) ainsi obtenue est de 55 cps.

*Préparation d'une solution de polymère **P2b** (réaction suivie par mesure de différentiel de pression Delta P)*

Dans un réacteur de 1 litre équipé d'un agitateur mécanique, on introduit 46,4g de la solution de polymère **P1a** et 748,4g d'eau. Le réacteur est muni d'une sonde de pH. Après 10 minutes d'agitation, on introduit 5,22g de glyoxal à 40% (en poids dans de l'eau) puis on ajuste le pH à 10,2 avec une solution de soude à 10% (en poids dans de l'eau). La température est maintenue entre 20 et 22°C. L'avancement de la réaction est contrôlé par mesure de DeltaP de la solution de polymère **P2b** (appareil de mesure de différentiel de pression : tube calibré de diamètre : 2mm et de longueur : 2,2m, débit de solution de **P2b** : 21 mL.min$^{-1}$). Lorsque le Delta P a varié de +300%, la réaction est stoppée par un abaissement du pH à moins de 3.5 par addition d'acide sulfurique (92% en poids dans de l'eau). La viscosité Brookfield (module LV1, 60 tours/minute/25°C) de la solution de polymère **P2b** (concentration massique : 2%) ainsi obtenue est de 54 cps.

**Exemple 3**

*Préparation d'une solution de polymère **P1b** (AM/DADMAC (95/5 mol%)) : amorçage polymérisation **P1b** avec du SPS et solution d'acrylamide non filtrée*

Dans un réacteur de 1 litre équipé d'un agitateur mécanique, d'un thermomètre, d'un réfrigérant et d'une canne plongeante d'azote gazeux, on introduit 333,8g d'eau, 50,1g de chlorure de diallyldiméthyl ammonium (DADMAC, 64% en poids dans de l'eau) et 500 ppm de biocatalyseur/acrylamide. Le pH de la solution est ajusté à 2.5 avec de l'acide sulfurique. Le milieu est chauffé et maintenu à une température comprise entre 79 et 81°C grâce à un bain-marie. Grâce à deux coulées continues, on incorpore 535,8 g d'une solution d'acrylamide filtrée (solution à 50% en poids) pendant 90 minutes et une solution de persulfate de sodium (SPS, 10% en poids dans de l'eau) pendant 90 minutes. Après 30 minutes de vieillissement, 0,26g de bisulfite de sodium (solution à 40% en poids) sont additionnés pour faire réagir les éventuels monomères résiduels. Un nouveau vieillissement de 60 minutes est appliqué avant refroidissement. La solution de polymère **P1b** obtenue a un pH de 4,8, une concentration massique en polymère de 29,9% et une viscosité Brookfield (module LV3, 12 tr/min, 25°C) de 8900 centipoises (cps).

*Préparation d'une solution de polymère **P2c** (réaction suivie par turbidimètre)*

Dans un réacteur de 1 litre équipé d'un agitateur mécanique, on introduit 46,4g de la solution de polymère **P1b** et 748,4g d'eau. Le réacteur est muni d'une sonde de pH. Après 10 minutes d'agitation, on introduit 5,22g de glyoxal à 40% (en poids dans de l'eau) puis on ajuste le pH à 10,2 avec une solution de soude à 10% (en poids dans de l'eau). La température est maintenue entre 20 et 22°C. L'avancement de la réaction est contrôlé par turbidité. Lorsque la variation de turbidité (turbidimètre Hanna) de la solution de polymère **P2c** est égale à +2 NTU, on stoppe la réaction par un abaissement du pH à moins de 3,5 par addition d'acide sulfurique (92% en poids dans de l'eau). La viscosité Brookfield (module LV1, 60 tours/minute/25°C) de la solution de polymère **P2c** (concentration massique : 2%) ainsi obtenue est de 15 cps.

*Préparation d'une solution de polymère **P2d** (réaction suivie par mesure de différentiel de pression Delta P)*

Dans un réacteur de 1 litre équipé d'un agitateur mécanique, on introduit 46,4g de la solution de polymère **P1b** et 748,4g d'eau. Le réacteur est muni d'une sonde de pH. Après 10 minutes d'agitation, on introduit 5,22g de glyoxal à 40% (en poids dans de l'eau) puis on ajuste le pH à 10,2 avec une solution de soude à 10% (en poids dans de l'eau). La température est maintenue entre 20 et 22°C. L'avancement de la réaction est contrôlé par mesure de DeltaP de la solution de polymère **P2d** (appareil de mesure de différentiel de pression : tube calibré de diamètre : 2mm et de longueur : 2,2m, débit de solution de **P2d** : 21 mL.min$^{-1}$). Lorsque le Delta P a varié de +300%, la réaction est stoppée par un abaissement du pH à moins de 3.5 par addition d'acide sulfurique (92% en poids dans de l'eau). La viscosité Brookfield (module LV1, 60 tours/minute/25°C) de la solution de polymère **P2d** (concentration massique : 2%) ainsi obtenue est de 53 cps.

**Exemple 4**

*Préparation d'une solution de polymère **P1c** (AM/DADMAC (95/5 mol%)) : amorçage polymérisation **P1c** avec du V50 et solution d'acrylamide filtrée*

Dans un réacteur de 1 litre équipé d'un agitateur mécanique, d'un thermomètre, d'un réfrigérant et d'une canne plongeante d'azote gazeux, on introduit 333,8g d'eau, 50,1g d'une solution de chlorure de diallyldiméthyl ammonium (DADMAC, 64% en poids dans de l'eau). Le pH de la solution est ajusté à 2,5 avec de l'acide sulfurique. Le milieu est chauffé et maintenu à une température comprise entre 79 et 81°C grâce à un bain-marie. Grâce à deux coulées continues, on incorpore 535,8 g d'une solution d'acrylamide filtrée (solution à 50% en poids) pendant 90 minutes et une solution de V50 (*2,2'-Azobis(2-methylpropionamidine)dihydrochloride*, 10% en poids dans de l'eau) pendant 90 minutes. Après 30 minutes de vieillissement, 0,26g de bisulfite de sodium (solution à 40% en poids) sont additionnés pour faire réagir les éventuels monomères résiduels. Un nouveau vieillissement de 60 minutes est appliqué avant refroidissement. La solution de polymère **P1c** obtenue a un pH de 5.0, une concentration massique en polymère de 30,1% et une viscosité Brookfield (module LV3, 12 tr/min, 25°C) de 8420 centipoises (cps).

*Préparation d'une solution de polymère **P2e** (réaction suivie par turbidimètre)*

Dans un réacteur de 1 litre équipé d'un agitateur mécanique, on introduit 46,4g de la solution de polymère **P1c** et 748,4g d'eau. Le réacteur est muni d'une sonde de pH. Après 10 minutes d'agitation, on introduit 5,22g de glyoxal à 40% (en poids dans de l'eau) puis on ajuste le pH à 10,2 avec une solution de soude à 10% (en poids dans de l'eau). La température est maintenue entre 20 et 22°C. L'avancement de la réaction est contrôlé par turbidité. Aucune variation de n de turbidité (turbidimètre Hanna) de la solution de polymère **P2e** n'est observée. La solution de polymère **P2e** se gélifie rapidement.

*Préparation d'une solution de polymère **P2f** (réaction suivie par mesure de différentiel de pression Delta P)*

Dans un réacteur de 1 litre équipé d'un agitateur mécanique, on introduit 46,4g de la solution de polymère **P1c** et 748,4g d'eau. Le réacteur est muni d'une sonde de pH. Après 10 minutes d'agitation, on introduit 5,22g de glyoxal à 40% (en poids dans de l'eau) puis on ajuste le pH à 10,2 avec une solution de soude à 10% (en poids dans de l'eau). La température est maintenue entre 20 et 22°C. L'avancement de la réaction est contrôlé par mesure de DeltaP de la solution de polymère **P2f** (appareil de mesure de différentiel de pression : tube calibré de diamètre : 2mm et de longueur : 2,2m, débit de solution de **P2f** : 21 mL.min$^{-1}$).). Lorsque le Delta P a varié de +300%, la réaction est stoppée par un abaissement du pH à moins de 3.5 par addition d'acide sulfurique (92% en poids dans de l'eau). La viscosité Brookfield (module LV1, 60 tours/minute/25°C) de la solution de polymère **P2f** (concentration massique : 2%) ainsi obtenue est de 57cps.

Les résultats des exemples 1 à 3 sont résumés dans la Table 1

**Table 1**

|  | Amorçage | Filtration Acrylamide | Viscosité polymère (cps) |  | Technologie suivi | Paramètres | Viscosité Brookfield (cps) |
|---|---|---|---|---|---|---|---|
| **P1a** | Persulfate sodium | oui | 8500 | **P2a** | Turbidité | 2 NTU | 55 |
|  |  |  |  | **P2b** | Delta P | 300% | 54 |
| **P1b** | Persulfate sodium | non | 8900 | **P2c** | Turbidité | 2 NTU | 15 |
|  |  |  |  | **P2d** | Delta P | 300% | 53 |
| **P1c** | Azoique V50 | oui | 8420 | **P2e** | Turbidité | 2 NTU | gel |
|  |  |  |  | **P2f** | Delta P | 300% | 57 |

Les solutions de polymères **P1a** et **P1b** se différencient par le fait que la solution de **P1b** contient du biocatalyseur (impureté habituelle provenant de l'acrylamide obtenu par méthode enzymatique). Ainsi, le suivi de la glyoxalation de ces polymères par turbidité conduit à des polymères de viscosité Brookfield différentes alors que lorsque le suivi de la réaction est effectué par mesure de la variation de différentiel de pression, les polymères obtenus ont des viscosités Brookfield équivalentes.

Lorsque l'amorçage pour l'obtention des polymères change (**P1a** et **P1c**), cela a une influence pour le suivi de la réaction de glyoxalation de ces polymères par turbidité. Les polymères obtenus sont différents : une solution (**P2a**) et un gel (**P2e**).

Cependant, lorsque le suivi de la réaction de glyoxalation est effectué par mesure de la variation de différentiel de pression, les polymères obtenus ont des viscosités Brookfield équivalentes.

**Exemple 5 : Essais applicatifs des polymères P2**

Pour ces exemples on utilise des pâtes de fibres recyclées

La pâte humide est obtenue par désintégration de pâte sèche afin d'obtenir une concentration aqueuse finale de 1% massique. Il s'agit d'une pâte à pH neutre composée à 100% de fibres de cartons recyclées.

Le dosage de chaque polymère P2 est de 2.5 kg sec / tonne de papier.

*Evaluation des performances d'égouttage (DDA)*

Le DDA (Dynamic Drainage Analyzer) permet de déterminer, de manière automatique, le temps (en secondes) nécessaire pour égoutter sous vide une suspension fibreuse. Les polymères sont ajoutés à la pâte humide (0.6 litre de pâte à 1.0 % massique) dans le cylindre du DDA sous agitation à 1000 tours par minute :

T=0s : mise en agitation de la pâte
T=10s : ajout polymère P2
T=30s : arrêt de l'agitation et égouttage sous vide à 200mBar pendant 60s

La pression sous la toile est enregistrée en fonction du temps. Lorsque toute l'eau est évacuée du matelas fibreux, l'air passe à travers celui-ci faisant apparaitre une rupture de pente sur la courbe représentant la pression sous toile en fonction du temps. Le temps, exprimé en secondes, relevé à cette rupture de pente correspond au temps d'égouttage. Plus le temps est faible, meilleur est donc l'égouttage sous vide.

*Performances en application DSR (résistance à sec), grammage à 80g.m-2*

La quantité nécessaire de pâte est prélevée de manière à obtenir au final une feuille présentant un grammage de 80g.m-2.

La pâte humide est introduite dans le cuvier de la formette dynamique et est maintenue sous agitation. On injecte à cette pâte les différents composants du système selon la séquence prédéfinie. On respecte généralement un temps de contact de 30 à 45 secondes entre chaque ajout de polymère.

Des formettes de papier sont réalisées avec une formette dynamique automatique : un buvard et la toile de formation sont placés dans le bol de la formette dynamique avant de démarrer la rotation du bol à 1000 tr.min-1 et de construire le mur d'eau. La pâte traitée est répartie sur le mur d'eau pour former le matelas fibreux sur la toile de formation.

Une fois que l'eau est drainée, le matelas fibreux est récupéré, pressé sous une presse délivrant 4 bars, puis séché à 117°C. La feuille obtenue est conditionnée pendant une nuit dans une pièce à humidité et température contrôlées (50% d'humidité relative et 23°C). Les propriétés de résistance à sec de toutes les feuilles obtenues par cette procédure sont alors mesurées. L'éclatement est mesuré avec un éclatomètre Messmer Buchel M 405 selon la norme TAPPI T403 om-02. Le résultat est exprimé en kPa. On détermine l'indice d'éclatement, exprimé en kPa.m$^2$/g, en divisant cette valeur par le grammage de la feuille testée.

La longueur de rupture à l'état sec est mesurée dans le sens machine avec un appareil de traction Testometric AX selon la norme TAPPI T494 om-01. Le résultat est exprimé en km.

Les résultats des essais applicatifs des polymères **P2** obtenus dans les exemples 1 à 3 sont résumés dans la Table 2 (% augmentation par rapport à un blanc).

**Table 2**

| Polymère | % Burst index | % DBL MD | % drainage |
|---|---|---|---|
| **P2a** | 21,4 | 16,2 | 34,8 |
| **P2c** | 15,8 | 10,6 | 19,4 |
| **P2b** | 21,4 | 16,2 | 34,8 |
| **P2d** | 21,9 | 16,2 | 34,2 |
| **P2f** | 21,9 | 16,5 | 35,1 |

Le polymère **P2c,** qui contient une impureté (biocatalyseur) pour lesquel la réaction de glyoxalaltion a été suivie par turbidimétrie, présente des performances inférieures en éclatement (burst), résistance à sec et drainage sous vide par comparaison aux polymères obtenus de façon identique (**P2d**) mais avec un suivi de la réaction de glyoxalation par mesure de différentiel de pression.

De plus, les polymères **P2b** et **P2f,** obtenus respectivement par glyoxalaltion de polymères P1a et **P1c** dont l'amorçage lors de leur polymérisation était différent (V50/SPS), présentent des performances équivalentes en résistance à sec du papier et drainage sous vide lorsque le suivi de la réaction de glyoxalalation a été effectué par mesure de différentiel de pression.

**Revendications**

**1.** Equipement pour préparer une solution d'un polymère **P2** non ionique, cationique, anionique ou amphotère par réaction entre un composé comprenant au moins une fonction aldéhyde et au moins une solution aqueuse de polymère base **P1** comprenant au moins un monomère non-ionique choisi parmi l'acrylamide, le méthacrylamide, le N,N-diméthylacrylamide, et l'acrylonitrile, ledit équipement comprenant un réacteur (1) muni d'un système d'agitation ; ainsi qu'au moins :

- un conduit (7) destiné à alimenter le réacteur en eau ,
- un conduit (11) équipé d'une pompe doseuse destiné à alimenter le réacteur en solution aqueuse de polymère P1,
- un conduit (10) équipé d'une pompe doseuse destiné à alimenter le réacteur en composé comprenant au moins une fonction aldéhyde ,
- un conduit (9) équipé d'une pompe doseuse destiné à alimenter le réacteur en base ;
- un conduit (8) équipé d'une pompe doseuse destiné à alimenter le réacteur en acide ;

ledit réacteur comprenant une boucle de recirculation (3) destinée à faire recirculer la solution de polymère **P2** depuis le fond (4) du réacteur (1) vers un niveau supérieur (5) du réacteur, **caractérisé en ce que** ledit circuit de recirculation (3) comprend entre la sortie du réacteur et l'entrée du réacteur, une pompe de recirculation (12), une sonde de mesure de pH (13), et un dispositif de mesure en ligne de différentiel de pression (14) sous la forme d'un tube calibré destiné à mesurer la différence de pression de la solution de polymère **P2** entre l'entrée et la sortie dudit tube calibré, ledit tube calibré étant positionné en dérivation de la boucle de recirculation.

**2.** Equipement selon la revendication 1 **caractérisé en ce que** le dispositif de mesure en ligne de différentiel de pression (14) est positionné de part et d'autre de la pompe de recirculation.

**3.** Equipement selon l'une des revendications précédentes, **caractérisé en ce que** le dispositif de mesure en ligne de différentiel de pression (14) comprend en outre :

- une vanne de régulation (15) permettant de maintenir un débit constant dans un tube calibré (17),
- un débitmètre (19) permettant de mesurer et de réguler le débit en aval de la vanne de régulation (15),

**4.** Equipement selon la revendication 3, **caractérisé en ce que** le dispositif de mesure en ligne de différentiel de pression (14) comprend, en aval de la vanne de régulation, un filtre double à mailles comprises entre 5 à 50 microns.

**5.** Equipement selon la revendication 4, **caractérisé en ce que** le dispositif de mesure en ligne de différentiel de pression (14) comprend, entre le filtre double maille et la vanne de régulation, un amortisseur de pulsation du circuit de recirculation.

**6.** Equipement selon l'une des revendications précédentes, **caractérisé en ce qu'**il comprend un turbidimètre (19) directement connecté sur la boucle de recirculation du réacteur (6).

**7.** Procédé pour préparer une solution d'un polymère **P2** non ionique, cationique, anionique ou amphotère issu de la réaction entre un composé comprenant au moins une fonction aldéhyde et au moins une solution aqueuse de polymère base **P1** comprenant au moins un monomère non-ionique choisi parmi l'acrylamide, le méthacrylamide, le N,N-diméthylacrylamide, et l'acrylonitrile, au moyen de l'équipement des revendications 1 à 6, ladite méthode comprenant les étapes successives suivantes :

- alimenter le réacteur (6) en eau et activer la pompe de recirculation,
- alimenter le réacteur (6) en polymère **P1** et activer le système d'agitation,
- alimenter le réacteur (6) en composé comprenant au moins une fonction aldéhyde,
- alimenter le réacteur (6) en base et stopper l'ajout lorsque la sonde de mesure de pH indique un pH compris entre 8 et 12,
- mesurer le différentiel de pression de la solution de polymère **P2** circulant dans la boucle de recirculation avec l'appareil de mesure en ligne de différentiel de pression (9),
- optionnellement mesurer en continu la turbidité de la solution de polymère **P2** au sein du réacteur (6),
- lorsque la variation du différentiel de pression de la solution de polymère **P2** atteint une valeur comprise entre 100 % et 500%, ajouter de l'acide dans le réacteur (6) et stopper l'ajout lorsque la sonde de mesure de pH indique un pH compris entre 2,5 et 5.

**8.** Procédé pour préparer une solution de polymère **P2** selon la revendication 7 **caractérisé en ce qu'**il comprend en outre les étapes suivantes :

- transférer la solution de polymère **P2** obtenue avec la pompe de recirculation dans une cuve de stockage dotée d'un moyen de détection de niveau bas en solution de polymère **P2,**
- rincer l'ensemble des conduits et le réacteur avec de l'eau,
- alimenter le réacteur (6) en eau lorsque le niveau bas de la cuve de stockage est détecté.

**Patentansprüche**

**1.** Ausrüstung zur Herstellung einer nicht- ionischen, kationischen, anionischen oder amphoteren Polymerlösung **P2** durch Reaktion zwischen einer Verbindung, die mindestens eine Aldehydfunktion und mindestens eine wässrige Lösung eines basischen Polymers **PI** enthält, das mindestens ein nicht-ionisches Monomer umfasst, das ausgewählt wird aus Acrylamid, Methacrylamid, N,N-dimethylacrylamid, und Acrylnitril, diese Ausrüstung umfasst einen Reaktor (1), ausgerüstet mit einem Rührsystem; sowie mindestens:

- eine Leitung (7), vorgesehen zur Versorgung des Reaktors mit Wasser,
- eine Leitung (11), ausgerüstet mit einer Dosierpumpe, vorgesehen zur Versorgung des Reaktors mit einer wässrigen Polymerlösung PI,
- eine Leitung (10) ausgerüstet mit einer Dosierpumpe, vorgesehen zur Versorgung des Reaktors mit einer Verbindung, die mindestens eine Aldehydfunktion umfasst,
- eine Leitung (9), ausgerüstet mit einer Dosierpumpe, vorgesehen zur Versorgung des Reaktors mit Lauge,
- eine Leitung (8), ausgerüstet mit einer Dosierpumpe, vorgesehen zur Versorgung des Reaktors mit Säure;

dieser Reaktor umfasst eine Rezirkulationsschleife (3), dazu bestimmt diese Polymerlösung **P2** vom Boden (4) des Reaktors (1) auf eine höhere Ebene (5) des Reaktors zu rezirkulieren, **dadurch gekennzeichnet, dass** dieser Rezirkulationskreislauf (3) außerdem zwischen dem Auslass des Reaktors und dem Einlass des Reaktors, eine Rezirkulationspumpe (12), eine pH- Messsonde (13), und eine On-line- Vorrichtung zur Messung der Druckdifferenz (14) in der Form eines kalibrierten Rohrs aufweist, zur Messung der Druckdifferenz der Polymerlösung **P2** zwischen dem Einlass und dem Auslass dieses kalibrierten Rohrs, dieses kalibrierte Rohr ist in Umleitung der Rezirkulationsschleife positioniert.

2. Ausrüstung nach Anspruch 1, **dadurch gekennzeichnet, dass** die On-line-Vorrichtung zur Messung der Druckdifferenz (14) beiderseits der Rezirkulationspumpe positioniert ist.

3. Ausrüstung nach einem der vorhergehenden Ansprüche, **dadurch gekennzeichnet, dass** die On-line- Vorrichtung zur Messung der Druckdifferenz (14) außerdem umfasst:

   - ein Reglerventil (15), mit dem eine konstante Durchflussmenge im kalibrierten Rohr (17) gehalten werden kann,
   - ein Durchflussmesser (19) mit dem die Durchflussmenge hinter dem Reglerventil (15) gemessen und geregelt werden kann.

4. Ausrüstung nach Anspruch 3, **dadurch gekennzeichnet, dass** die On-line-Vorrichtung zur Messung der Druckdifferenz (14) hinter dem Reglerventil ein doppeltes Filtergewebe mit einer Maschenweite zwischen 5 und 50 Mikron aufweist.

5. Ausrüstung nach Anspruch 4, **dadurch gekennzeichnet, dass** die On-line-Vorrichtung zur Messung der Druckdifferenz (14) außerdem zwischen dem doppelten Filtergewebe und dem Reglerventil einen Pulsationsdämpfer für den Rezirkulationskreislauf umfasst.

6. Ausrüstung nach einem der vorangehenden Ansprüche, **dadurch gekennzeichnet, dass** sie ein Trübungsmessgerät (19) enthält, das direkt mit der Rezirkulationsschleife des Reaktors (6) verbunden ist.

7. Verfahren zur Vorbereitung einer ionischen, kationischen, anionischen oder amphoteren Polymerlösung **P2,** hervorgegangen aus der Reaktion zwischen einer Verbindung, die mindestens eine Aldehydfunktion und mindestens eine wässrige, basische Polymerlösung **PI** enthält und dabei mindestens ein nicht-ionisches Monomer umfasst, das ausgewählt wird aus Acrylamid, Methacrylamid, N,N-dimethylacrylamid, und Acrylnitril, mittels der Ausrüstung nach den Ansprüchen 1 bis 6, dieses Verfahren umfasst die folgenden aufeinanderfolgenden Schritte:

   - Versorgung des Reaktors (6) mit Wasser und Aktivierung der Rezirkulationspumpe,
   - Versorgung des Reaktors (6) mit Polymer **PI** und Aktivierung des Rührsystems,
   - Versorgung des Reaktors (6) mit einer Verbindung, die mindestens eine Aldehydfunktion enthält,
   - Versorgung des Reaktors (6) mit Lauge und Unterbrechung der Zugabe, sobald die pH- Messsonde einen pH
   - Wert zwischen 8 und 12 angibt.
   - Messung der Druckdifferenz der Polymerlösung **P2,** die in der Rezirkulationsschleife zirkuliert mit der On-line-Vorrichtung zur Messung der Druckdifferenz (9),
   - optional kontinuierliche Messung der Trübung der Polymerlösung **P2** innerhalb des Reaktors (6),
   - wenn die Veränderung der Druckdifferenz der Polymerlösung **P2** einen Wert zwischen 100 % und 500% erreicht, Zugabe von Säure in den Reaktor (6) und Unterbrechung der Zugabe, wenn die pH- Messsonde einen pH - Wert zwischen 2,5 und 5 anzeigt.

8. Verfahren zur Herstellunge einer Polymerlösung **P2** nach Anspruch 7, **dadurch gekennzeichnet, dass** es außerdem die folgenden Schritte enthält:

   - Übertragung der erhaltenen Polymerlösung **P2** mit der Rezirkulationspumpe in einen Lagertank, ausgerüstet mit einer Vorrichtung zur Erkennung eines unteren Pegels der Polymerlösung **P2,**
   - Spülen aller Leitungen und des Reaktors mit Wasser,
   - Versorgung des Reaktors (6) mit Wasser, wenn der untere Pegel des Lagertanks erkannt wird.

**Claims**

1. Equipment for preparing a solution of a non-ionic, cationic, anionic or amphoteric polymer **P2** by reaction between a compound comprising at least one aldehyde function and at least one aqueous solution of base polymer **P1** comprising at least one non-ionic monomer selected among acrylamide, methacrylamide, N,N-dimethylacrylamide, and acrylonitrile, said equipment comprising a reactor (1) provided with a stirring system; as well as at least:

   - a pipe (7) intended to feed the reactor with water,
   - a pipe (11) equipped with a metering pump intended to feed the reactor with a polymer **P1** aqueous solution,
   - a pipe (10) equipped with a metering pump intended to feed the reactor with the compound comprising at least one aldehyde function,
   - a pipe (9) equipped with a metering pump intended to feed the reactor with base,
   - a pipe (8) equipped with a metering pump intended to feed the reactor with acid,

   said reactor comprising a recirculation loop (3) intended to make the polymer **P2** solution recirculate from the bottom (4) of the reactor (1) towards an upper level (5) of the reactor, **characterised in that** said recirculation circuit (3) comprises between the outlet of the reactor and the inlet of the reactor, a recirculation pump (12), a pH measuring probe (13), and a pressure differential in-line measuring device (14) in the form of a calibrated tube intended to measure the pressure difference of the polymer **P2** solution between the inlet and the outlet of said calibrated tube, said calibrated tube being positioned in the bypass of the recirculation loop.

2. The equipment according to claim 1, **characterised in that** the pressure differential in-line measuring device (14) is positioned on either side of the recirculation pump.

3. The equipment according to one of the preceding claims, **characterised in that** the pressure differential in-line measuring device (14) further comprises:

   - a control valve (15) allowing maintaining a constant flow rate in a calibrated tube (17),
   - a flowmeter (19) allowing measuring and regulating the flow rate downstream of the control valve (15).

4. The equipment according to claim 3, **characterised in that** the pressure differential in-line measuring device (14) comprises, downstream of the control valve, a duplex filter with meshes comprised between 5 and 50 microns.

5. The equipment according to claim 4, **characterised in that** the pressure differential in-line measuring device (14) comprises, between the duplex filter and the control valve, a pulsation dampener of the recirculation circuit.

6. The equipment according to one of the preceding claims, **characterised in that** it comprises a turbidimeter (19) directly connected on the recirculation loop of the reactor (6).

7. A method for preparing a solution of a non-ionic, cationic, anionic or amphoteric polymer **P2** derived from the reaction between a compound comprising at least one aldehyde function and at least one aqueous solution of base polymer **P1** comprising at least one non-ionic monomer selected among acrylamide, methacrylamide, N,N-dimethylacrylamide, and acrylonitrile, by means of the equipment of claims 1 to 6, said method comprising the following successive steps:

   - feed the reactor (6) with water and activate the recirculation pump,
   - feed the reactor (6) with the polymer **P1** and activate the stirring system,
   - feed the reactor (6) with the compound comprising at least one aldehyde function,
   - feed the reactor (6) with base and stop the addition when the pH measuring probe indicates a pH comprised between 8 and 12,
   - measure the pressure differential of the polymer **P2** solution circulating in the recirculation loop with the pressure differential in-line measuring device (9),
   - optionally continuously measure the turbidity of the polymer **P2** solution within the reactor (6),
   - when the variation of the pressure differential of the polymer **P2** solution reaches a value comprised between 100% and 500%, add acid into the reactor (6) and stop the addition when the pH measuring probe indicates a pH comprised between 2.5 and 5.

8. The method for preparing a polymer **P2** solution according to claim 7, **characterised in that** it further comprises the following steps:

- transfer the obtained polymer **P2** solution with the recirculation pump into a stock tank provided with a means for detecting a low level of the polymer **P2** solution,
- rinse all pipes and the reactor with water,
- feed the reactor (6) with water when the low level of the stock tank is detected.

Fig 1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20170306065 A